# EUROPEAN PATENT APPLICATION

(11) **EP 3 361 214 A1**
(43) Date of publication of application: **15.08.2018**
(21) Application number: 17205044.5
(22) Date of filing: 01.12.2017
(51) Int. Cl.: G01C 11/02, G06T 7/60

(54) **IMAGE PROCESSING SYSTEM**

(30) Priority: 14.02.2017 US 201715432623
(71) Applicant: Honeywell International Inc., Morris Plains, NJ 07950 (US)
(72) Inventor: PICKETT, Chad, Morris Plains, NJ 07950 (US); JEPPESEN, Tyler, Morris Plains, NJ 07950 (US)
(74) Representative: Houghton, Mark Phillip

(57) **Abstract**

An image processing system for processing airborne acquired images provides at least one measurement data output. The system may include an airborne imaging device to capture image data, an interface coupled to receive information contemporaneous with the image data and a user interface coupled to receive an input. The system may further include a processor operatively coupled to the imaging device to receive the image data; to the interface to receive with the information, and to the user interface to receive the input. The processor may be coupled to a memory containing non-transitory instructions for controlling the operation of the processor, such that the processor is operable to provide the measured data output corresponding to at least one object depicted in the image data based upon the image data, the information and the operator input.

## Description

This invention was made with Government support under Contract No. Contract Number: AG-009544-1.3.1.1 / 7014274832-0002, Program ARA USAF. The Government has certain rights in this invention.

### TECHNICAL FIELD

This patent generally relates to the assessment of airborne acquired images, and in particular, this patent relates to an image system to provide a measurement data from within an airborne acquired image.

### BACKGROUND

Aircraft have long been used to acquire images, still and moving, of ground based objects and features. From these images, accurate measurement assessment of the size and position of objects, including the relative size and position of ground features and objects, provides information useful to any number of applications.

Accurate measurement of object size and position within an airborne acquired still image requires taking into account the position and orientation of the airborne imaging device, e.g., camera, relative to the imaged object, and the relationship of the object within the image relative to known features as the image is captured. Often the application requires measurement data in real time, and given the numerous considerations, presents a significant problem to the system designer.

Therefore, it is desirable to provide a system to provide accurate assessment, e.g., measurement data from airborne acquire still images in real time with useful accuracy.

### SUMMARY

In a non-limiting, exemplary embodiment, an image processing system for processing airborne acquired images provides at least one measurement data output. The system may include an airborne imaging device to capture image data, an interface coupled to receive additional data contemporaneous with the image data and a user interface coupled to receive an input. The system may further include a processor operatively coupled to the imaging device to receive the image data; to the interface to receive with the additional data, and to the user interface to receive the input. The processor may be coupled to a memory containing non-transitory instructions for controlling the operation of the processor, such that the processor is operable to provide the measurement data output corresponding to at least one object depicted in the image data based upon the image data, the additional data and the operator input.

### BRIEF DESCRIPTION OF THE DRAWINGS

The exemplary embodiments will hereinafter be described in conjunction with the following drawing figures, wherein like numerals denote like elements, and wherein:
FIG. 1 is a graphic depiction of an image processing system in accordance with one or more of the herein described embodiments;
FIG. 2 is a block diagram depiction of an image processing system in accordance with one or more of the herein described embodiments;
FIG. 3 is a block diagram depiction of still image data in accordance with one or more herein described embodiments;
FIGs. 4-10 are graphic illustrations of still image data processing as used by the systems and methods according to the herein described embodiments; and
FIGs. 11-12 are a graphic depictions of a user interface in accordance with the herein described embodiments.

### DETAILED DESCRIPTION

In accordance with the herein described embodiments there are provided image processing systems that yield measurement data of objects and features from airborne acquired still image data.

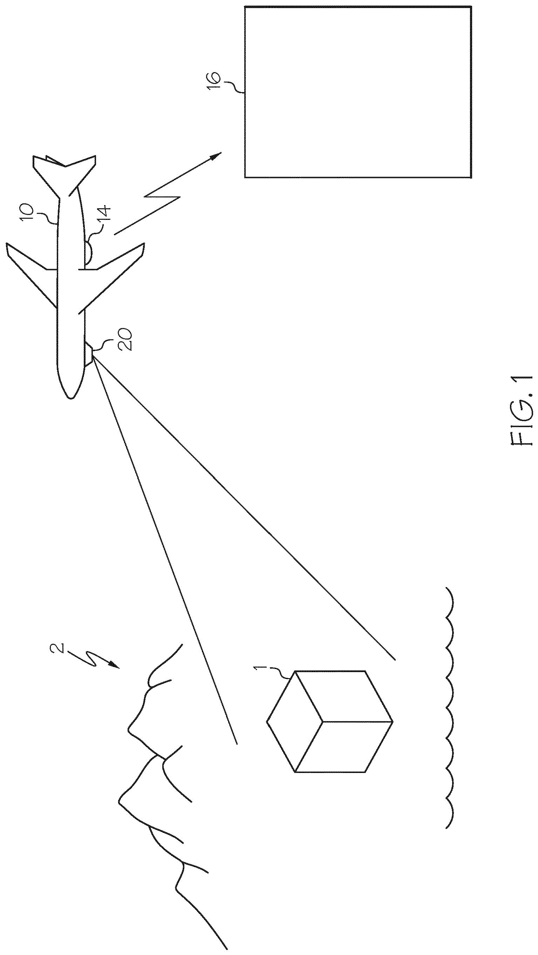

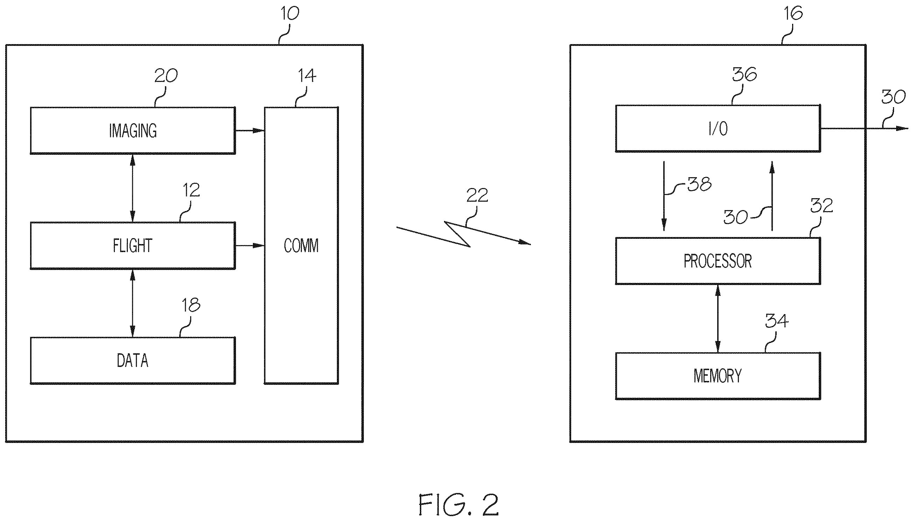

Referring to FIGs. 1 and 2, an aircraft 10 includes a flight data system 12, such as a Digital Flight Data Acquisition Unit (DFDAU), which may be operably coupled to an Aircraft Communication and Report System (ACARS) or other suitable communication architecture 14 to communicatively link the aircraft 10 with a ground-based data management system or base station 16. The aircraft 10 may further include or have access to additional data, such as digital terrain elevation data (DTED), other such topographical or geographical data, or access thereto, via a data resource 18. The aircraft 10 itself may be a manned vehicle or an unmanned arial vehicle (UAV).

The aircraft 10 further includes one or more imaging systems, such as imaging system 20, such as a camera, operable to acquire still image data 22 of an object 1 (FIG. 1) and its surrounding environment 2. The imaging system 20 may operate in accordance with virtually any known imaging technology including imaging in visible light, invisible light, radio spectrum and the like to yield at least the still image data 22. The still image data 22 may be captured as a single frame or may be a single frame of data from video or other continuous motion imaging data. The imaging system 20 may provide the still image data 22 in a suitable digital information format suitable for communication to the base station 16 via radio communication.

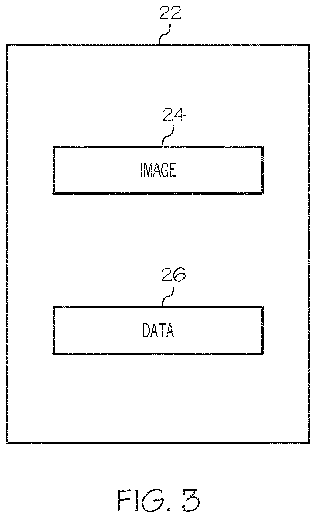

With reference to FIG. 3, within the still image data 22 there are included visual image data 24 and additional data 26 acquired contemporaneous with the acquired image data 24. For example, the additional data 26 may include data acquired from the flight data system 12 including conditions of the aircraft 10 carrying the imaging device 20 contemporaneous with image acquisition and including, without limitation, altitude (above ground level (AGL) and/or mean sea level (MSL), digital terrain elevation data (DTED), roll, pitch and azimuth. The additional data may also include imaging device 20 data, such as aspect ratio, pixel size and shape, camera distortion (barrel and/or pin cushion error), stabilization effect, zoom, and the like. Moreover, the flight data system 12 or other aircraft 10 systems may provide slant range and slant/gimbal angle data. In at least one of the herein described embodiments, the additional data 26 at least includes for the imaging device 20, horizontal field of view (hFOV, as an angle); vertical field of view (vFOV, as an angle); horizontal pixels (integer); vertical pixels (integer) and maximum aircraft ground angle. The still image data 22 may further assume that the ground is a flat plane, and the plane within which the image is acquired is perpendicular to the ground, i.e., a ground angle of 90 degrees. The image data 24 and the additional data 26 form the still image data 22 that is communicated from the aircraft 10 to the base station 16.

The base station 16 includes an image data processing system 28, that is operably coupled to receive the still image data 22. While depicted as part of the base station 16, it will be appreciated that the image data processing system 28 may be provided within the aircraft 10, or that various functionality may be disposed between the aircraft 10 and the base station 16. As depicted in FIGs. 1 & 2, in the exemplary embodiment, the image data processing system resides in the base station 16.

The image data processing system 28 is operable on the still image data 22 to provide a measurement data output 30. The image data processing system 28 includes a processor 32, which may be an application specific or general purpose microprocessor coupled to a memory 34. The memory 34 includes random access memory (RAM) and nonvolatile memory containing instructions to control the overall operation of the processor 32. The image data processing system 28 further includes a user interface 36, such as a graphic user interface including an input/output device or devices to receive user input 38, such as a touch screen device, heads-up display and selector device, and/or mouse, keyboard and display screen arrangement, and to depict the measurement data output 30 or to communicate the measurement data output 30 to other resources (not depicted).

As will be described, the measurement data output 30 may be the position of a target point within the image and a distance or distances from a target point to one or more other points within the image. For example, the measurement data output 30 may be the distance between two points identified on the object 1 representing, for example, the width or the height of the object 1. Alternatively, the measurement data output 30 may be a distance from an identified point within the image to an object. Furthermore, the measured data output 30 may be based upon various image adjustment criteria and/or correction criteria applied to the image data 24 in view of the additional data 26.

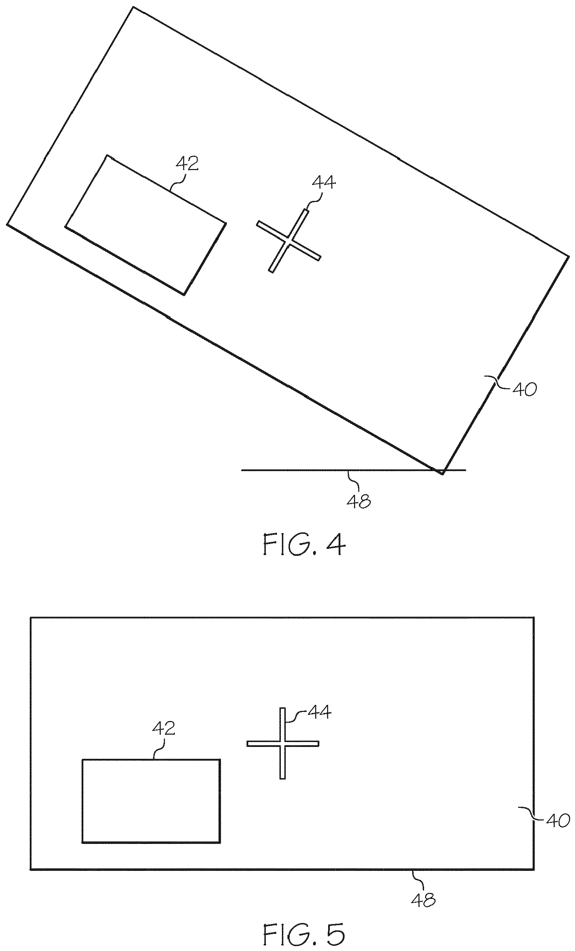

In accordance with the herein described embodiments, the measurement data output 30 may assume that all of the pixels in the image are level with the ground, and are not otherwise altered or distorted. The processor 28 is operable to correct for image distortions such as camera roll, stabilization affects, aspect ratio and pixel size, and others. The processor 28 may correct the still image data 22 to provide corrected still image 44 (FIG. 5) on the user interface 36, or image data correction may be accomplished during determination of the measurement data output 30.

FIGs. 4 and 5 illustrate an image plane 40 as captured by the imaging system 20 as still image data 22. FIG. 4 illustrates the image plane 40 where either the imaging system 20, the aircraft 10 or a combination thereof are rotated relative to the ground, which in accordance with the herein described embodiments, may be considered a flat plane. An image 42 of the object 1 appears in the image plane 40, as does a target point 44. The target point 44 is translated to the center of the image, e.g., x=0, y=0 in a coordinate frame, and the image plane 40 is rotated to provide the still image plane 40 including the object 1 corrected, e.g., roll effect removed, for example, to align with a ground plane 48, as depicted in FIG. 5.

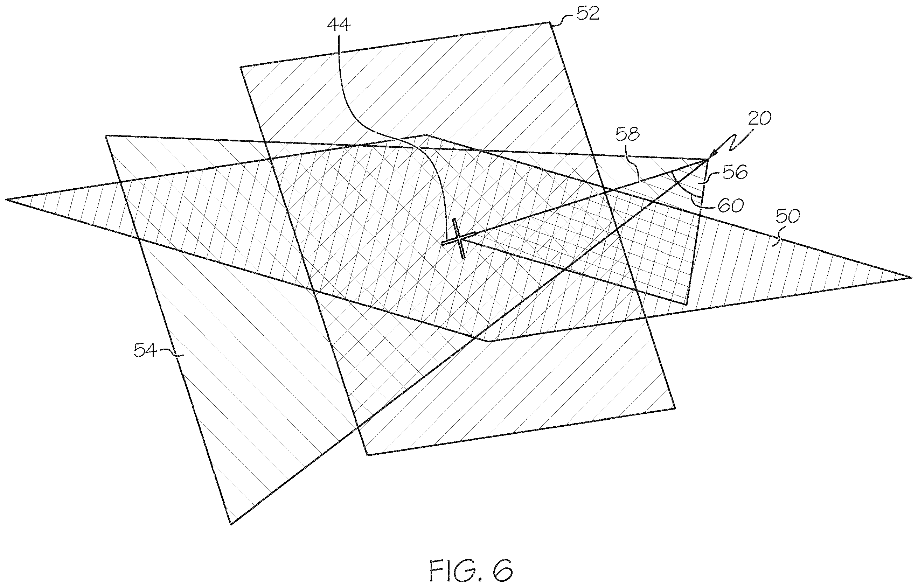

FIGs. 6-10 graphically depict image processing of the image data processing system 28 in accordance with the herein described embodiment. FIG. 6 depicts a ground plane 50, an image plane 52, a vertical field of view (vFOV) 54 and a target triangle 56. The target triangle 56 is formed as a right triangle with the hypotenuse, i.e., the slant range 58, extending from the imaging system 20 to the target point 44 in the image plane 52. The slant range 58 and slant angle 60 may be provided by onboard aircraft systems, or calculated from available data.

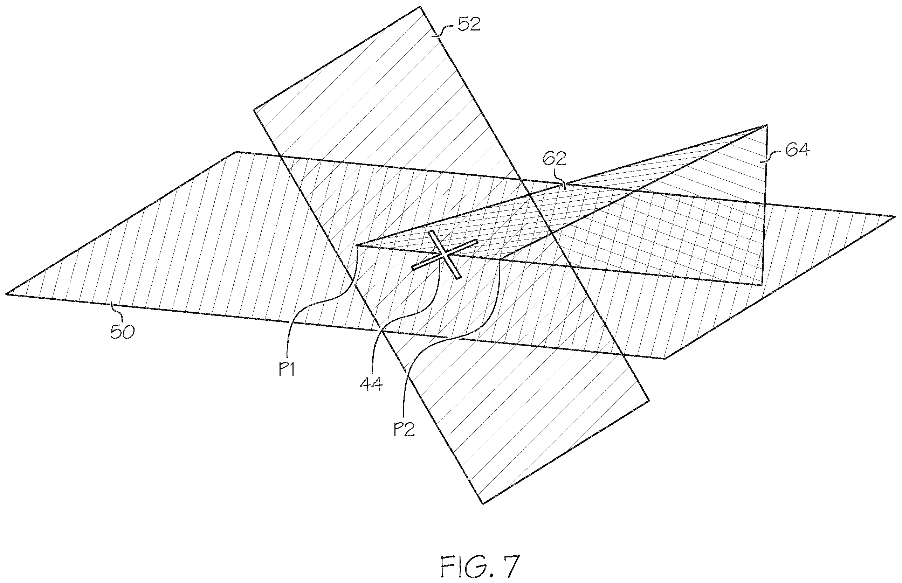

FIG. 7 depicts two points, P1 and P2 appearing within the image plane 52, points P1 and P2 physically existing on the ground plane 50, a P1 vertical triangle 62 and a P2 vertical triangle 64 may be formed. The points P1 and P2 may be points as they appear on the image plane 52 of the object 1. The points P1 and P2 may be automatically selectable or operator selectable as an input 38 to the processor 32 via the user interface 36.

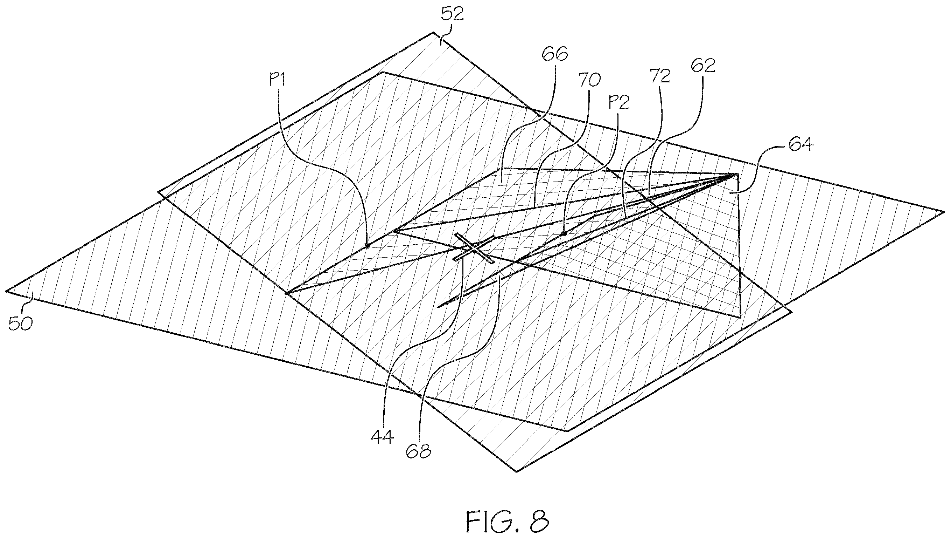

FIG. 8 illustrates horizontal field of view (hFOV) triangle 66 extending through PI, as depicted in FIG. 8, and hFOV triangle 68 extending through P2. The hFOV triangles 66 and 68 are given by the hFOV angle of the imaging system 20, a known value. The triangles 66 and 68 are formed such that, respectively, the hypotenuse 70 of P1 vertical triangle 62 divides the triangle 66 into halves, each half being a right triangle, and the hypotenuse 72 of triangle 64 divides the triangle 68 into halves, each half being a right triangle.

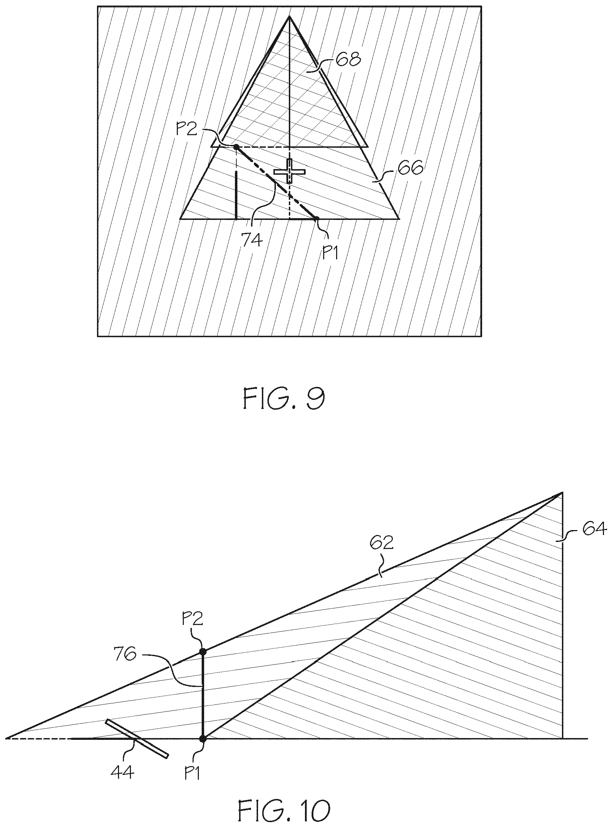

FIG. 9 illustrates how the construction of the vertical triangles 62 and 64 and the horizontal triangles 66 and 68 provide a measured output data 30, i.e., the distance 74 between point P1 and point P2 on the ground. FIG. 10 illustrates how the construction of the vertical triangles 62 and 64 provide a measured output data 30, i.e., the vertical distance 76 of P2 above PI, with P1 being on the ground. In the case that P2 is not directly above P1 in the image plane 52, i.e., the user has not selected the points P1 and P2 in a straight vertical line, an additional triangle (not depicted) may be formed having a hypotenuse extending through the points P1 and P2.

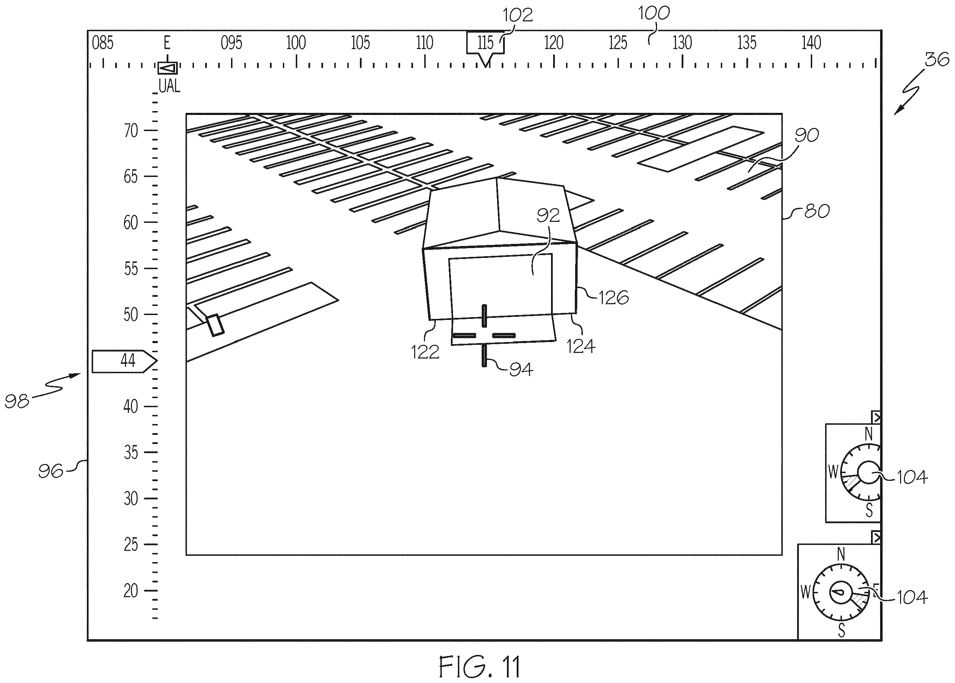

FIGs. 11-12 depict a screen 80 of the user interface 36 showing an image plane 90 of still image data 22. Within the image plane 90 there appears an image 92 of the object 1. Optionally, a cross-hairs 94 appears in the middle of the image plane 90 providing a convenient indication of the center of the image plane 90. The screen 80 further includes along a vertical border 96 a Above Ground Level (AGL) indication 98, which is an estimate of the aircraft 10 position AGL used to provide the measurement data output 30. Along a horizontal board 98 there is provided a heading indication 102. A pitch indicator 104 provides an indication of the pitch of the imaging system 20 away from the horizontal plane of the aircraft 10, i.e., how much the imaging system 20 is pointing toward the ground. This pitch may be an input to the measurement data 30 determinations. It is presented for reference, but it is not necessary to be presented to a user when taking measurements. A compass rosette 106 may further be depicted.

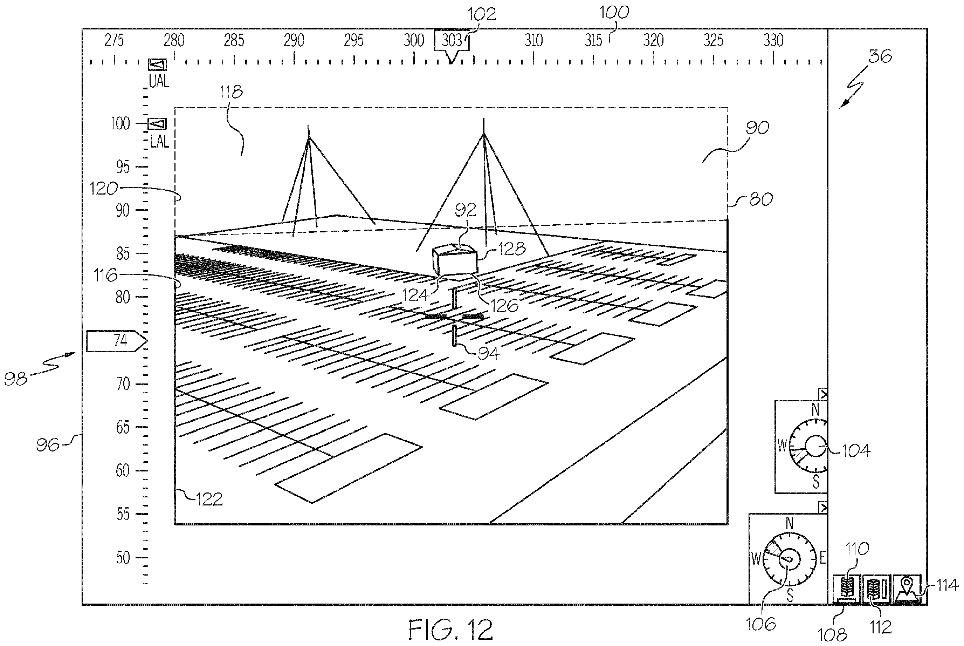

As shown in FIG. 11, the image 92 of object 1 is corrected, if necessary, and appears centered relative to the cross-hairs 94 in the image plane 90. FIG. 12 depicts the image 92 of the object 1 in far field, the center of the image plane 90 being indicated by the cross-hairs 94. When the image 92 is offset from center, the cross-hairs 94 may be color-coded providing the user an indication of the data point driving determination of the measurement output data 30.

Depicted in FIG. 12, is a measurement tool bar 108 including a function selection icons for horizontal measurement 110, vertical measurement 112 and target point selection 114. Also depicted in FIG. 11, are measurement confidence lines 116 bordering the image plane 90. The confidence lines 116 may appear in color, such as green, yellow and red, providing an indication of the level of confidence in a measurement. As an object image, such as image 92, approaches the horizon 118 in the image plane 90, e.g., the image device 20 looking nearly straight forward or having a slant angle approaching zero (0) degrees, measurement error increases up to being unmeasurable, i.e., measurement error become infinite. Hence, a portion 120 of the confidence lines 116 may appear red near a top portion of the screen 80 (as depicted in FIG. 11) indicating measurement is not possible. Below the portion 118, the portion 122 of the confidence lines 116 may appear yellow or green depending on a relative confidence in the ability to obtain accurate measurement data.

Using touch screen, touch pen, mouse, keyboard or any suitable selector device (not depicted), a user is able to select a measurement functionality from the tool bar 106, and then select one or more points in the image plane 90 to affect a measurement and to provide measurement output date 30. For example, the user may select horizontal measurement 108. Next, the user may select an initial point 122 (e.g., PI) on the image 92 of the object 1 as depicted, and then select a second point 124 (e.g., P2) on the image 92. The image data processing system 28 is operable to provide a measured data output 30 representing the horizontal distance a ground plane between the two selected points 122 and 124. In another example, the user may select vertical measurement 110. Next, the user selects point 124 and a third point 126 on the image 92. The image data processing system 28 is operable to provide a measured data output 30 representing the directly vertical distance between the two selected points 124 and 126. In still a further example, the user may select target point functionality 112. After selecting a target point 128, the image data processing system 28 is operable to provide a measured data output 30 representing a position on the ground of the target point 128, and furthermore, horizontal or vertical distance measurements between the target point 128 and other selected points within the image plane 90.

The measured data output 30 may be provided an indicated directly to the user within the screen 80. Alternatively, the measured data output 30 may be provide to one or more devices or systems that may require use of the measured data output 30.

The foregoing detailed description is merely exemplary in nature and is not intended to limit the application and uses. Furthermore, there is no intention to be bound by any expressed or implied theory presented in the preceding technical field, background, brief summary or the detailed description. It should be understood that throughout the drawings, corresponding reference numerals indicate like or corresponding parts and features. As used herein, the term system or module may refer to any combination or collection of mechanical systems and components and/or other suitable components that provide the described functionality.

Embodiments may be described herein in terms of functional and/or logical block components and various processing steps. It should be appreciated that such block components may be realized by any number, combination or collection of mechanical components configured to perform the specified functions. Those skilled in the art will appreciate that the herein described embodiments may be practiced in conjunction with any number of mechanical components and systems, and that the systems described herein are merely exemplary.

For the sake of brevity, conventional components and techniques and other functional aspects of the components and systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the invention.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing the exemplary embodiment or exemplary embodiments. It should be understood that various changes can be made in the function and arrangement of elements without departing from the scope of the disclosure as set forth in the appended claims and the legal equivalents thereof. Accordingly, details of the exemplary embodiments or other limitations described above should not be read into the claims absent a clear intention to the contrary.

## Claims

1. An image processing system for processing airborne acquired images to provide measurement data output, the system comprising:
an airborne imaging device to capture image data;
an interface coupled to receive additional data contemporaneous with the image data;
a user interface coupled to receive an input; and
a processor operatively coupled to the imaging device to receive the still image data, to the interface to receive the additional data, and to the user interface to receive the input, the processor further being coupled to a memory containing non-transitory instructions for controlling the operation of the processor, wherein the processor is operable to provide the measurement data output corresponding to at least one object depicted in the image data based upon the image data, the additional data and the operator input.

2. The image processing system of claim 1, wherein the imaging device comprises at least one of an aircraft borne imaging device; an airborne camera or an unmanned aerial vehicle (UAV) and the processor may be disposed in a ground base station communicatively linked to the imaging device.

3. The image processing system of claim 1, wherein the measurement data output comprises at least one of a ground plane horizontal distance measurement, a direct vertical distance measurement and a target point location.

4. The image processing system of claim 1, wherein the processor is further operable to correct the image data to provide corrected image data, and to provide the measured distance output based upon the corrected image data.

5. The image processing system of claim 4, wherein the corrected image data comprise the image data corrected for at least one of: camera roll, stabilization affect, aspect ratio, pixel size and ground reference plane.

6. The image processing system of claim 1, wherein the additional data comprises at least one of: altitude (above ground level (AGL) and/or mean sea level (MSL), digital terrain elevation data (DTED), roll, pitch and azimuth.

7. The image processing system of claim 1, wherein the additional data comprises at least one of: imaging device aspect ratio, pixel size, pixel shape, camera distortion, slant range data; slant/gimbal angle data; imaging device horizontal field of view, vertical field of view; horizontal pixels; vertical pixels and maximum ground angle.

8. The image processing system of claim 1, wherein the processor is further operable to form at least one geometric relationship to provide the measurement data output.

9. The image processing system of claim 1, wherein the input comprises at least one of a first object point selection and a target point selection.

10. The image processing system of claim 1, wherein the user interface is operable to provide a measurement confidence indication including a confidence indication depicted as a border color of a display screen.
